(19) **Europäisches Patentamt**

**European Patent Office**

**Office européen des brevets**

(11) **EP 1 516 466 B1**

(12) **EUROPEAN PATENT SPECIFICATION**

(45) Date of publication and mention
of the grant of the patent:
**23.08.2006 Bulletin 2006/34**

(51) Int Cl.:
*H04L 25/03* (2006.01)

(21) Application number: **03760648.0**

(86) International application number:
**PCT/EP2003/006445**

(22) Date of filing: **18.06.2003**

(87) International publication number:
**WO 2004/002092 (31.12.2003 Gazette 2004/01)**

(54) **METHOD FOR ESTIMATING NOISE AUTO-CORRELATION**

VERFAHREN ZUR SCHÄTZUNG DER RAUSCH-AUTOCORRELATION

PROCEDE PERMETTANT D'ESTIMER L'AUTO-CORRELATION DU BRUIT

(84) Designated Contracting States:
**AT BE BG CH CY CZ DE DK EE ES FI FR GB GR
HU IE IT LI LU MC NL PT RO SE SI SK TR**

(30) Priority: **25.06.2002 US 180837**

(43) Date of publication of application:
**23.03.2005 Bulletin 2005/12**

(73) Proprietor: **TELEFONAKTIEBOLAGET LM
ERICSSON (publ)
164 83 Stockholm (SE)**

(72) Inventor: **HE, Shousheng
S-247 35 Södra Sandby (SE)**

(74) Representative: **Boesen, Johnny Peder et al
Zacco Denmark A/S
Hans Bekkevolds Allé 7
2900 Hellerup (DK)**

(56) References cited:
**WO-A-01/39448          US-A- 6 151 358
US-B1- 6 233 276**

**Description**

**TECHNICAL FIELD**

This invention relates to equalizers, and more particularly, to a method for using a one-side window for weighting noise auto-correlation estimates in an equalizer.

**BACKGROUND OF THE INVENTION**

Equalizers are utilized for baseband processing in wireless communication systems. Some equalizers require an estimation of the noise auto-correlation for equalizer settings and other parameter estimates. When the interference/noise of a wireless digital communication system does not comprise white noise and includes, for example, cochannel and/or adjacent channel interference, knowledge of the character of the noise is essential to the performance of the equalizer. Optimal performance of the equalizer requires an unbiased channel estimation, an unbiased frequency offset estimation and unbiased whitening filter settings. However, since the noise character of a provided signal is usually not known, an estimation of the noise auto-correlation must be performed. The quality of this estimation affects the performance of the equalizer.

The performance of an equalizer based upon the noise auto-correlation calculated according to existing methods has been shown to degrade in certain channel conditions such as high signal to noise ratio (SNR). Within existing methods, different auto-correlation elements of the calculated auto-correlation have different qualities. Due to the limited lengths of a training sequence used to calculate the noise auto-correlation, the quality of the noise auto-correlation elements decrease with the offset. The last few elements are not very reliable due to the small number of product terms of the noise components being used. This unreliability introduces a distortion that significantly degrades the performance of the equalizer when later elements of the estimated auto-correlation are used.

U.S. Patent No. 6,151,358 describes an apparatus, computer program, and method for producing filter coefficients for an equalizer. The method is described as including the steps of estimating a response of a communication channel to a signaling pulse, estimating an autocorrelation of noise and interference of the communication channel, computing an array based on the estimation of the response of the communication channel and the estimation of the autocorrelation, and designating at least one pivot point in the array. The method is further described as recursively performing the steps of transforming the array by a sequence of operations, storing at least one element of the at least one pivot position, shifting the at least one element of the at least one pivot position, determining whether the shifted transformed array contains at least one non-zero element, and calculating the filter coefficients based on the stored at least one element and the estimation of the response of the communication channel.

U.S. Patent No. 6,233,276 describes a method for reducing the number of digital filter coefficients in an equalizer for use in an xDSL communication system. A full-length equalizer channel impulse response is truncated by first selecting a subset of contiguous tap weights, applying a smoothing window to the selected subset, and convolving with a time domain representation of a frequency domain filter to produce a shorter equalizer having fewer coefficients so as to improve data transmission rate.

**SUMMARY OF THE INVENTION**

The present invention overcomes the foregoing and other problem with a method for estimating a noise auto-correlation for an equalizer wherein an initial estimated noise auto-correlation is first established, and a weighted window is selected to decrease unreliable elements of the noise auto-correlation. The estimated noise auto-correlation is weighted by the weighted window by multiplying the noise auto-correlation by the weighted window.

**BRIEF DESCRIPTION OF THE DRAWINGS**

A more complete understanding of the method and apparatus of the present invention may be obtained by reference to the following Detailed Description when taken in conjunction with the accompanying Drawings wherein:

FIGURE 1 is a block diagram of a portion of an estimation based automatic frequency correction (AFC) receiver;
FIGURE 2 is a flow diagram illustrating the method of the present invention; and
FIGURE 3 illustrates the performance of an equalizer using windowed noise auto-correlation with respect to an equalizer using a phase locked loop approach.

## DETAILED DESCRIPTION

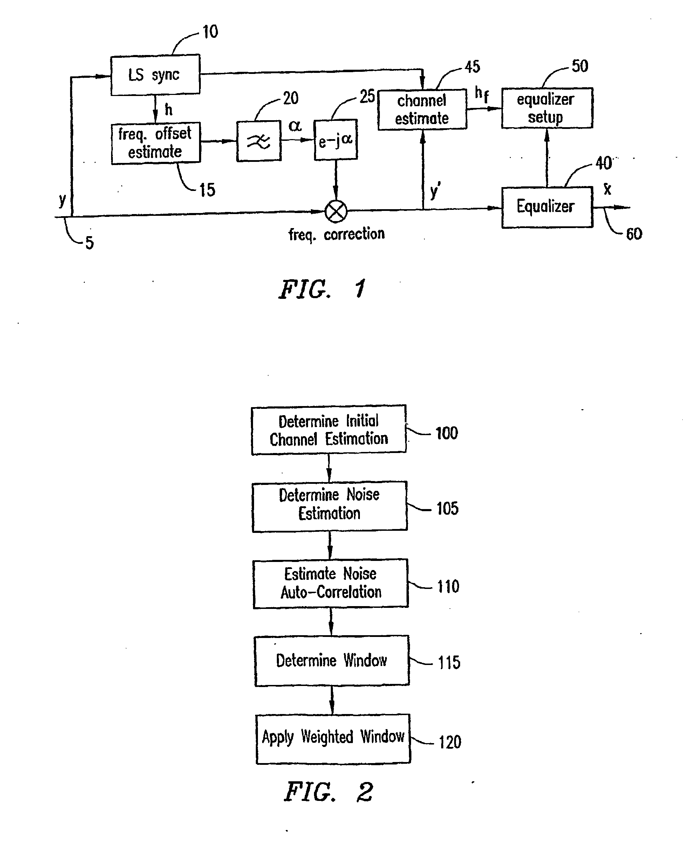

Referring now to the drawings, and more particularly to FIGURE 1, there is illustrated a block diagram of a portion of an estimation based automatic frequency correction (AFC) receiver according to the present invention. A received signal y is applied to an input 5. The received signal $y$ has an accurate burst synchronization achieved using an efficient least squares estimation approach at 10. This enables an initial determination of the channel span, an initial estimation of the channel taps and a noise estimate to be obtained. The incremental phase offset corresponding to the frequency offset $\alpha$ is estimated at 15 assuming knowledge of the channel noise characteristics. The frequency offset $\alpha$ is smoothed at 20, 25 by a simple low-pass filter to remove glitches from the estimation. Frequency offset is corrected at 30 by incrementally derotating the received signal $y$ with $\alpha$. The frequency corrected signal $y'$ is provided to the equalizer 40 and channel estimate block 45. Channel estimate block 45 generates a channel estimate which is applied to the equalizer set up 50. The equalizer set up 50 determines a number of parameters required by the equalizer 40 including an estimated noise auto-correlation. Using the frequency corrected signal $y'$ and the parameters generated by the equalizer set up 50, the equalizer 40 generates the equalized output signal $x$ at control 60.

Referring now to FIGURE 2, there is illustrated a method for generating a windowed noise auto correlation within the equalizer set up 50 of a TDMA receiver used in, for example, a GSM/EDGE systems. A training sequence of limited length $N$ is transmitted together with a data sequence for the estimation of a multi-path ($M$-tap) channel. The training sequence is embedded in the received signal. A windowed estimation of noise auto-correlation is obtained by first determining at 100 an initial channel estimation using white noise according to the equation:

$$\hat{h} = (T^H T)^{-1} T^H r \qquad (1)$$

where $T$ is the matrix of the training sequence, and $r$ is the received signal of $N - M + 1$ symbols. A noise estimation at 105 is determined by taking the difference between the received signal $r$ and a predicted signal $r$ according to the equation.

$$\hat{n} = r - \hat{r} = r - T\hat{h} \qquad (2)$$

Estimation of the noise auto-correlation function from the noise estimation will then be determined at 110 according to the equation:

$$\rho_k = \frac{1}{N - M + 1} \sum_{j=0}^{N-M+1-k} \hat{n}_j^* \hat{n}_{j+k} \qquad (3)$$

where * indicates complex conjugation.

Simulations of the performance of an equalizer based upon the noise auto-correlation calculated using equation (3) shows degradation within channel conditions such as high signal to noise ratio. A close examination of equation (3) reveals that different auto-correlation elements are of different quality. All the auto-correlation elements have to be calculated from product terms $n_j^* n_{j+k}$ of $N - M + 1$ noise components. The first element $\rho_0$ using $N - M + 1$ terms $n_j^* n_j$, the second element $\rho_1$ using $N - M$ terms $n_j^* n_{j+1}$, and so on. The last element $\rho_{N-M+1}$ uses only one term $n_0^* n_{N-M+1}$. Thus, due to the limited length of the training sequence, the quality of the noise auto-correlation elements decreases with the offset. The last few elements are not very reliable due to the use of too few product terms of the noise components. This unreliability introduces a distortion that can significantly degrade the equalizer performance when later elements of the estimated auto-correlation must be used.

This problem may be overcome by applying a weighting window at step 120 to the estimated noise auto-correlation determined at step 115 according to the equation:

$$\varphi_k = \rho_k w_k \qquad (4)$$

The window $w_k$ is chosen in such a way as to decrease the importance of the unreliable elements in the estimation while retaining the positive definite property of the noise auto-correlation matrix.

In one embodiment, a practical choice can be a one-side Hanning (raise cosine) window:

$$w_k = \frac{1}{2}\left(\cos\left(\frac{k\pi}{N-M+1}\right)+1\right), \qquad k=0,...,N-M+1 \qquad (5)$$

The use of the one-side Hanning window is merely meant for purposes of illustration and it should be realized that any window chosen to decrease the importance of unreliable elements in the estimation while maintaining the positive properties of the noise auto-correlation matrix would be applicable. Other possible window forms include a Hamming or Blackman window as disclosed in "Discrete-time Signal Processing", A. V. Oppenheim and R. W. Schafer, Prentice Hall 1989.

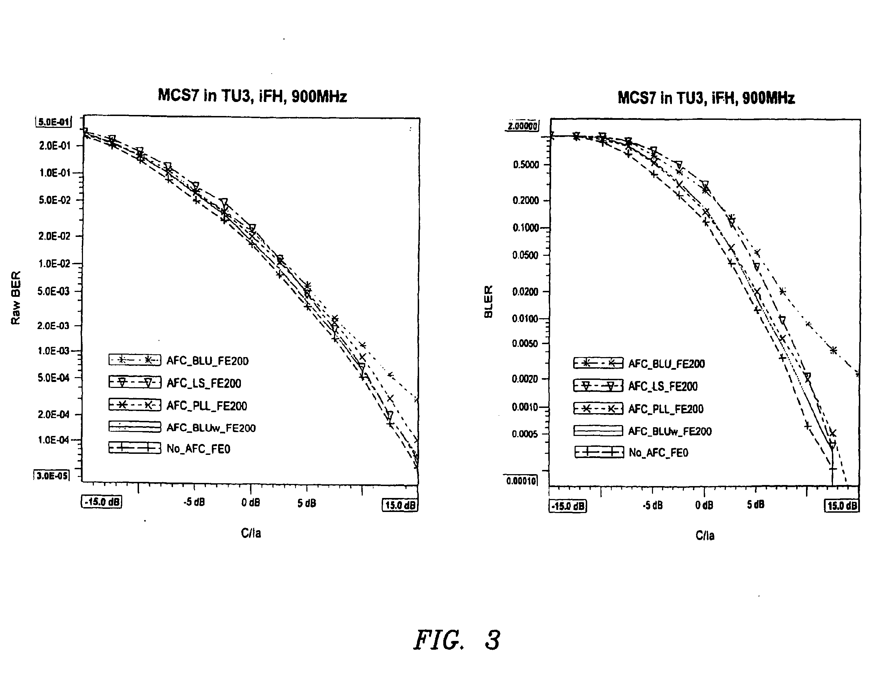

Adding a one-side window to the noise auto-correlation has been proven to be a simple and effective manner to improve performance of an equalizer. Simulation results such as those illustrated in FIGURE 3 demonstrate the performance of a AFC receiver using windowed noise auto-correlation comparing favorably to an equalizer using a phase locked loop approach.

The previous description is of a preferred embodiment for implementing the invention, and the scope of the invention should not necessarily be limited by this description. The scope ofthe present invention is instead defined by the following claims.

**Claims**

1. A method for estimating noise auto-correlation for an equalizer, comprising the steps of:

   • estimating an initial channel; and
   • determining a noise estimate;

   **characterized in that**

   • the step of estimating (100) the initial channel is performed responsive to a received signal and a matrix of a training sequence;
   • the step of determining (105) a noise estimate is performed responsive to the received signal, the matrix of the training sequence, and the initial channel estimation; and
   • the method further comprises

      • estimating (110) a noise auto-correlation responsive to the noise estimation;
      • selecting (115) a weighted window to decrease unreliable elements of the estimated noise auto-correlation; and
      • weighting (120) the estimated noise auto-correlation by the weighted window by multiplying the estimated noise auto-correlation by the weighted window.

2. The method of Claim 1, wherein the weighted window comprises a one-side Hanning window.

3. The method of Claim 1, wherein the step of selecting further comprises selecting the weighted window, $w_k$, according to the equation:

$$w_k = \frac{1}{2}\left(\cos\left(\frac{k\pi}{N-M+1}\right)+1\right), \qquad k=0,...,N-M+1$$

,

   where $N$-$M$+1 is the number of symbols in the received signal.

4. An equalizer, comprising:

• an input (5) for a received signal;
• an output (60) for an equalized signal; and
• first circuitry (50) connected to the input (5) and the output (60)

**characterized in that** the first circuitry (50) is configured to:

• estimate an initial channel responsive to the received signal and a matrix of a training sequence;
• determine a noise estimate responsive to the received signal, the matrix of the training sequence, and the initial channel estimation;
• estimate a noise auto-correlation responsive to the noise estimate;
• select a weighted window to decrease unreliable elements of the estimated noise auto-correlation; and
• weight the estimated noise auto-correlation by the weighted window by multiplying the estimated noise auto-correlation by the weighted window.

**5.** The equalizer of Claim 4, wherein the weighted window comprises a one-side Hanning window.

**6.** The equalizer of Claim 4, wherein the weighted window, $w_k$, is selected according to the equation:

$$w_k = \frac{1}{2}\left(\cos\left(\frac{k\pi}{N-M+1}\right)+1\right), \qquad k = 0,...,N-M+1 \ ,$$

where $N$-$M$+1 is the number of symbols in the received signal.

**Patentansprüche**

**1.** Verfahren zum Schätzen der Rausch-Autokorrelation für einen Entzerrer, die folgenden Schritte umfassend:

• Schätzen eines ursprünglichen Kanals, und
• Bestimmen einer Rauschschätzung,

**dadurch gekennzeichnet, dass**

• der Schritt des Schätzens (100) des ursprünglichen Kanals als Reaktion auf ein empfangenes Signal und eine Matrix einer Trainingssequenz ausgeführt wird,
• der Schritt des Bestimmens (105) einer Rauschschätzung als Reaktion auf das empfangene Signal, die Matrix der Trainingssequenz und die ursprüngliche Kanalschätzung ausgeführt wird, und
• das Verfahren ferner Folgendes umfasst:

• Schätzen (110) einer Rausch-Autokorrelation als Reaktion auf die Rauschschätzung,
• Auswählen (115) eines gewichteten Fensters, um unzuverlässige Elemente der geschätzten Rausch-Autokorrelation zu verringern, und
• Gewichten (120) der geschätzten Rausch-Autokorrelation durch das gewichtete Fenster durch Multiplizieren der geschätzten Rausch-Autokorrelation mit dem gewichteten Fenster.

**2.** Verfahren nach Anspruch 1, wobei das gewichtete Fenster ein einseitiges Hanning-Fenster aufweist.

**3.** Verfahren nach Anspruch 1, wobei der Schritt des Auswählens ferner das Auswählen des gewichteten Fensters $w_k$ gemäß der folgenden Gleichung aufweist:

$$w_k = \frac{1}{2}(\cos\left(\frac{k\pi}{N-M+1}\right)+1) \ , \qquad k = 0,...,N-M+1$$

wobei $N$-$M$+1 die Anzahl der Symbole in dem empfangenen Signal ist.

**4.** Entzerrer umfassend:

- einen Eingang (5) für ein empfangenes Signal,
- einen Ausgang (60) für ein entzerrtes Signal, und
- erste Schaltkreise (50), die an den Eingang (5) und den Ausgang (60) angeschlossen sind,

**dadurch gekennzeichnet, dass** die ersten Schaltkreise (50) konfiguriert sind, um:

- einen ursprünglichen Kanal als Reaktion auf das empfangene Signal und eine Matrix einer Trainingssequenz zu schätzen,
- eine Rauschschätzung als Reaktion auf das empfangene Signal, die Matrix der Trainingssequenz und die ursprüngliche Kanalschätzung zu bestimmen,
- eine Rausch-Autokorrelation als Reaktion auf die Rauschschätzung zu schätzen,
- ein gewichtetes Fenster auszuwählen, um unzuverlässige Elemente der geschätzten Rausch-Autokorrelation zu verringern, und
- die geschätzte Rausch-Autokorrelation mit dem gewichteten Fenster zu gewichten, indem die geschätzte Rausch-Autokorrelation mit dem gewichteten Fenster multipliziert wird.

**5.** Entzerrer nach Anspruch 4, wobei das gewichtete Fenster ein einseitiges Hanning-Fenster aufweist.

**6.** Entzerrer nach Anspruch 4, wobei das gewichtete Fenster $w_k$ gemäß der folgenden Gleichung ausgewählt wird:

$$w_k = \frac{1}{2}\left(\cos\left(\frac{k\pi}{N-M+1}\right)+1\right), \qquad k = 0,\ldots,N-M+1$$

wobei $N$-$M$+1 die Anzahl der Symbole in dem empfangenen Signal ist.

**Revendications**

**1.** Procédé destiné à estimer l'auto-corrélation du bruit pour un égaliseur, comprenant les étapes consistant à :

- estimer un canal initial ; et
- déterminer une estimation du bruit ;

**caractérisé en ce que**

- l'étape d'estimation (100) du canal initial est exécutée en réponse à un signal reçu et à une matrice d'une séquence d'apprentissage ;
- l'étape de détermination (105) d'une estimation du bruit est exécutée en réponse au signal reçu, à la matrice de la séquence d'apprentissage et à l'estimation de canal initial ; et
- le procédé comprend en outre les étapes consistant à :

  - estimer (110) une auto-corrélation du bruit en réponse à l'estimation du bruit ;
  - sélectionner (115) une fenêtre pondérée afin de réduire des éléments non fiables de l'auto-corrélation du bruit estimée ; et
  - pondérer (120) l'auto-corrélation du bruit estimée à l'aide de la fenêtre pondérée en multipliant l'auto-corrélation du bruit estimée par la fenêtre pondérée.

**2.** Procédé selon la revendication 1, dans lequel la fenêtre pondérée consiste en une fenêtre de Hanning unilatérale.

**3.** Procédé selon la revendication 1, dans lequel l'étape de sélection comprend en outre la sélection de la fenêtre pondérée $w_k$ selon l'équation :

$$w_k = \frac{1}{2}\left(\cos\left(\frac{k\pi}{N-M+1}\right)+1\right), \qquad k = 0,...,N-M+1$$

où N - M + 1 est le nombre des symboles dans le signal reçu.

4. Égaliseur, comprenant :

   - une entrée (5) pour un signal reçu ;
   - une sortie (60) pour un signal égalisé ; et
   - un premier agencement de circuits (50) connecté à l'entrée (5) et à la sortie (10)

   **caractérisé en ce que** le premier agencement de circuits (50) est configuré pour :

   - estimer un canal initial en réponse au signal reçu et à une matrice d'une séquence d'apprentissage ;
   - déterminer une estimation du bruit en réponse au signal reçu, à la matrice de la séquence d'apprentissage et à l'estimation de canal initial ;
   - estimer une auto-corrélation du bruit en réponse à l'estimation du bruit ;
   - sélectionner une fenêtre pondérée afin de réduire des éléments non fiables de l'auto-corrélation du bruit estimée ; et
   - pondérer l'auto-corrélation du bruit estimée à l'aide de la fenêtre pondérée en multipliant l'auto-corrélation du bruit estimée par la fenêtre pondérée.

5. Égaliseur selon la revendication 4, dans lequel la fenêtre pondérée consiste en une fenêtre de Hanning unilatérale.

6. Égaliseur selon la revendication 4, dans lequel la fenêtre pondérée $w_k$ est sélectionnée selon l'équation :

$$w_k = \frac{1}{2}\left(\cos\left(\frac{k\pi}{N-M+1}\right)+1\right), \qquad k = 0,...,N-M+1$$

où N - M + 1 est le nombre des symboles dans le signal reçu.

**FIG. 1**

**FIG. 2**

FIG. 3